# EUROPEAN PATENT SPECIFICATION

(11) **EP 3 046 232 B1**
(45) Date of publication and mention of the grant of the patent: **22.08.2018**
(21) Application number: 16151229.8
(22) Date of filing: 14.01.2016
(51) Int. Cl.: H02K 3/52, H02K 5/20, H02K 9/19

(54) **ONE-PIECE END WINDING SUPPORT WITH INTEGRATED LUBRICANT MANIFOLD**
EINTEILIGER ENDWICKLUNGSTRÄGER MIT INTEGRIERTEM SCHMIERMITTELVERTEILER
SUPPORT D'ENROULEMENT D'EXTRÉMITÉ MONOBLOC AVEC COLLECTEUR DE LUBRIFIANT INTÉGRÉ

(30) Priority: 16.01.2015 US 201514598792
(43) Date of publication of application: 20.07.2016
(73) Proprietor: Hamilton Sundstrand Corporation, Charlotte, NC 28217 (US)
(72) Inventor: PATEL, Dhaval, Loves Park, IL 61111 (US); BRUST, Eric A., Machesney Park, IL 61115 (US); MANOGUE, Brady A., Beloit, WI 53511 (US); KOESTER, Kevin J., Winnebago, IL 61088 (US); HUFSTEDLER, Glenn W., Loves Park, IL 61111 (US); SHERMAN, William D., Kingston, IL 60145 (US); HANSON, Alan D., Winnebago, IL 61088 (US); MACONAGHY, Shaun, Shabbona, IL 60550 (US); OOYEN, Christine Lynn, Winnebago, 61088 (US)
(74) Representative: Dehns

(56) References cited:
- US-A1- 2010 320 860
- US-A1- 2011 133 579

## Description

### BACKGROUND

The present disclosure relates to a generator and, in particular, to a main rotor of a generator.

Typically, a generator includes a rotor having a plurality of windings (made up of electrically conductive wires) wrapped around elongated poles on a rotor core. The rotor is driven to rotate by a source of rotation, a prime mover such as a turbine rotor. The generator rotor rotates in proximity to a stator, and the rotation of the rotor, which is an electromagnet due to electricity running through the windings, induces a voltage in the stator. The voltage in the stator can be applied to external electrical components, providing electrical power to those components. During operation, the generator rotor rotates at very high speeds, creating centrifugal forces on the poles and windings that may cause the wires of the windings on the poles to move. End winding supports at each end of the poles are used to support the windings under centrifugal load and ensure that the wires do not move from a desired position. End winding supports are taught in US 2011/133579 and US 2010/320860.

### SUMMARY

There is provided an end winding support for a generator rotor as defined by claim 1.

There is also provided a rotor for a generator as defined by claim 12.

### BRIEF DESCRIPTION OF THE DRAWINGS

FIG. 1 is a general schematic sectional view of a generator for a gas turbine engine.
FIG. 2A is a perspective view of a main rotor assembly.
FIG. 2B is a perspective view of a main rotor assembly without the windings.
FIG. 3 is a perspective view of an end winding support.
FIG. 4A is a cross-section elevation view of the end winding support.
FIG. 4B is a cross-section perspective view of the end winding support.

### DETAILED DESCRIPTION OF THE DRAWINGS

An end winding support for a generator rotor is disclosed herein that includes a lubricant manifold that provides cooling lubricant, such as oil, from the interior of the rotor, and more specifically, from the rotor shaft, to an electrically conductive wire winding wrapped around a portion of the rotor. The lubricant manifold can include orifices that extend through the end winding support and allow oil or another lubricant to pass from the rotor shaft to the windings. The lubricant manifold can also include an annulus on the radially annular inner surface of the end winding support to provide a space for the lubricant to accumulate before passing through the orifices. The annulus can be a metering device to ensure that a proper amount of lubricant is being transferred through the orifices. Additionally, the end winding support can include a crowned surface on winding support arms, which are adjacent to the windings, to reduce stresses on the windings while holding the individual wires in place. The end winding support is one continuous piece that circumferentially encircles the rotor shaft and is placed onto the rotor core, with the rotor shaft protruding through the end winding support and rotor core during installation. The one-piece configuration of the end winding support is preferred on some generators to provide a more complete connection between the rotor and the end winding support and to reduce the number of pieces that can become damaged during operation. The lubricant manifold (the orifices and annulus) is integrated into the end winding support to allow for lubricant, such as oil, to be distributed to the windings without additional and cumbersome lubricant/oil distribution components.

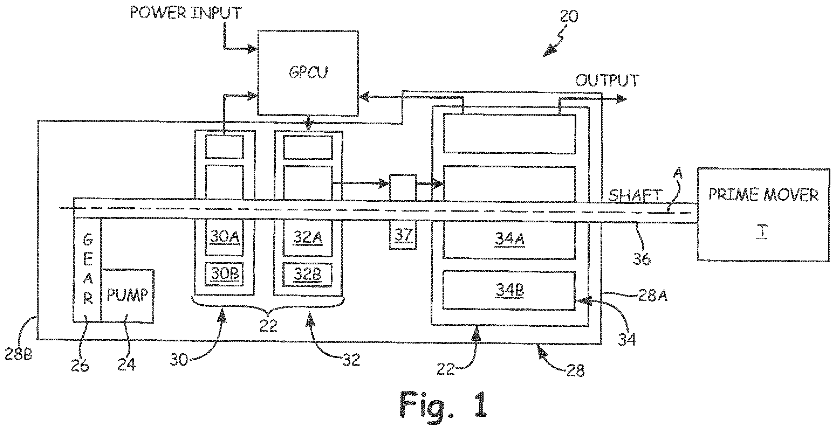

FIG. 1 is a general schematic sectional view of a generator. Generator 20 is driven by prime mover T, which can be, for example, a gas turbine engine. Generator 20 produces electrical energy when being driven by prime mover T. Generator 20 generally includes dynamoelectric portion 22, positive displacement pump 24, and gearbox 26, all of which are contained within housing assembly 28. Although a variable frequency generator (VFG) is illustrated in the disclosed embodiment, it should be understood that other generator systems, such as a variable frequency starter generator (VFSG) and integrated drive generator (IDG), are also within the scope of the invention.

Dynamoelectric portion 22 in the disclosed, non-limiting embodiment is a three-phase machine that includes permanent magnet generator 30, main exciter 32, and main generator 34 (the three phases) mounted along rotor shaft 36, which rotates about axis of rotation A. Permanent magnet generator 30 includes rotor assembly 30A and stator assembly 30B, main exciter 32 includes rotor assembly 32A and stator assembly 32B, and main generator 34 includes rotor assembly 34A and stator assembly 34B. Stator assemblies 30B, 32B, and 34B are installed in housing assembly 28 and do not rotate while rotor assemblies 30A, 32A, and 34A are installed on rotor shaft 36 and rotate in unison. Housing assembly 28 may be closed at one end by drive-end cover assembly 28A through which rotor shaft 36 extends and at the other end by non-drive-end cover assembly 28B through which rotor shaft 36 does not extend.

Permanent magnet generator 30, with rotor assembly 30A and stator assembly 30B, supplies power for generator excitation, as well as power for other components of an electrical system. Main exciter 32, with rotor assembly 32A and stator assembly 32B, receives field excitation from permanent magnet generator 30 through the generator power control unit (GPCU). The output of main exciter 32 is supplied to rotor mounted diode pack 37. Diode pack 37 can be divided into six diodes to provide a three-phase full wave bridge rectification. The DC current output of diode pack 37 supplies main generator 34 with electricity. Main generator 34, with rotor assembly (main rotor assembly) 34A and stator assembly (main stator assembly) 34B, outputs power to supply exterior electrical energy needs.

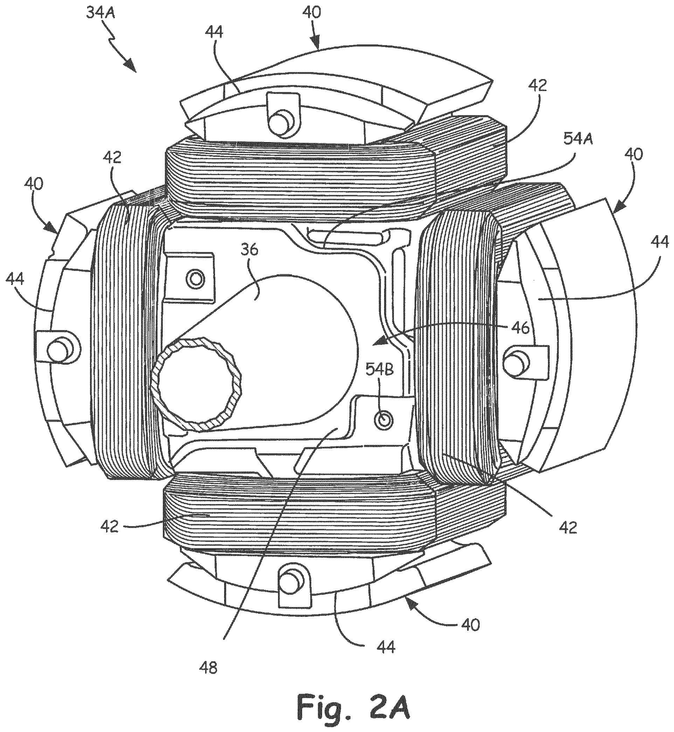

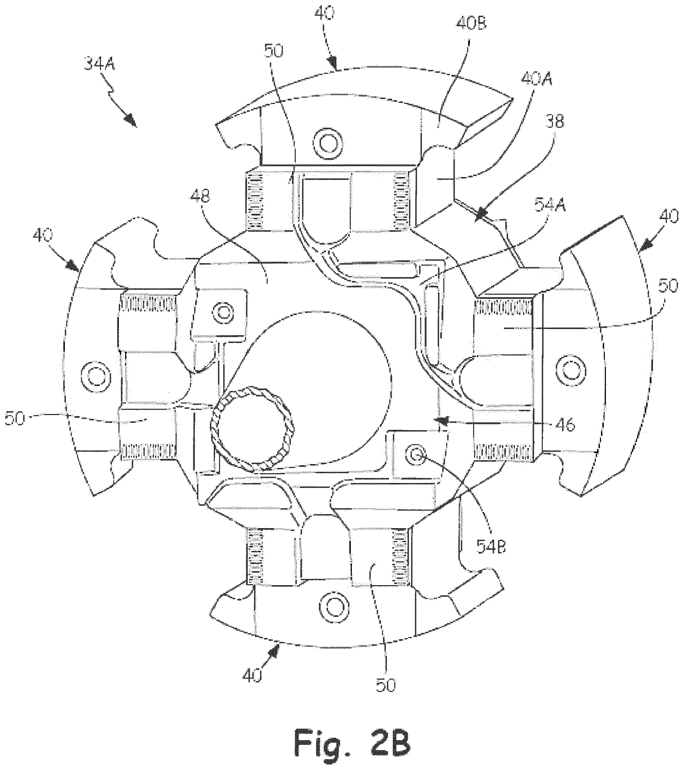

FIG. 2A is a perspective view of main rotor assembly 34A with the windings in view, while FIG. 2B is a perspective view of main rotor assembly 34A without the windings shown. Main rotor assembly 34A includes, among other components, a portion of rotor shaft 36, rotor core 38 (which includes poles 40 having pole body 40A and wings 40B), windings 42, pole winding supports 44, and end winding support 46. Ending winding support 46 include support body 48 and winding support arms 50 (shown in FIG. 2B).

As discussed above, main rotor assembly 34A is radially outward from and mounted on rotor shaft 36 so that main rotor assembly 34A rotates with rotor shaft 36 (which is driven by prime mover T) about axis of rotation A. Rotor shaft 36 can have a constant diameter along the axial length of rotor shaft 36 or can have a varying diameter depending on design considerations.

Rotor core 38 is radially outward from rotor shaft 36 and is the principal structural component of main rotor assembly 34A. Rotor core 38 extends axially along rotor shaft 36 and rotates in unison with rotor shaft 36. Rotor core 38 can be made from a variety of suitable materials, including metal or another material than can handle the elevated temperatures and high centrifugal forces caused by the rotation of rotor assembly 34A.

Poles 40 are radially extending components of rotor core 38. Poles 40 run axially along the outer side of rotor core 38 and can span the entire axial length of rotor core 38. Poles 40 can be made from the same material as rotor core 38, and rotor core 38 and poles 40 can be one continuous piece. While FIGS. 2A and 2B show rotor core 38 having four poles 40, rotor core 38 can have a number of different configurations that include a different number of poles 40, such as configurations that include six or eight poles 40. As seen more easily in FIG. 2B, poles 40 have a generally T shape with pole body 40A that is attached to the body of rotor core 38 and wings 40B that extend circumferentially in both directions. The outer surface of poles 40 can be curved so as to reduce drag on rotor core 38 when rotor shaft 36, rotor core 38, and poles 40 are rotating at high speeds.

Wrapped around each of poles 40 are windings 42, which are each continuous wires that are electrically conductive and wrapped multiple times around pole body 40A of poles 40. The wires of windings 42 can be arranged in a single layer on poles 40 or can be multiple layers of wires. Windings 42 are each connected to diode pack 37, which provides windings 42 with DC current to cause windings 42 to become an electromagnet. When rotor shaft 36, rotor core 38, poles 40, and electromagnetic windings 42 are in operation, they rotate and induce voltage in main stator assembly 34B which is used to output electrical energy.

Pole winding supports 44 are located on each end of poles 40 and configured to hold the ends of each of windings 42 in place. Pole winding supports 44 also function to hold end winding support 46 in place. Pole winding supports 44 can be fastened to poles 40 by various means; including adhesive, bolts, rivets, latches, welds, or other fasteners; and can be made from a variety of materials, such as a material that is non-magnetic, including aluminum or plastic.

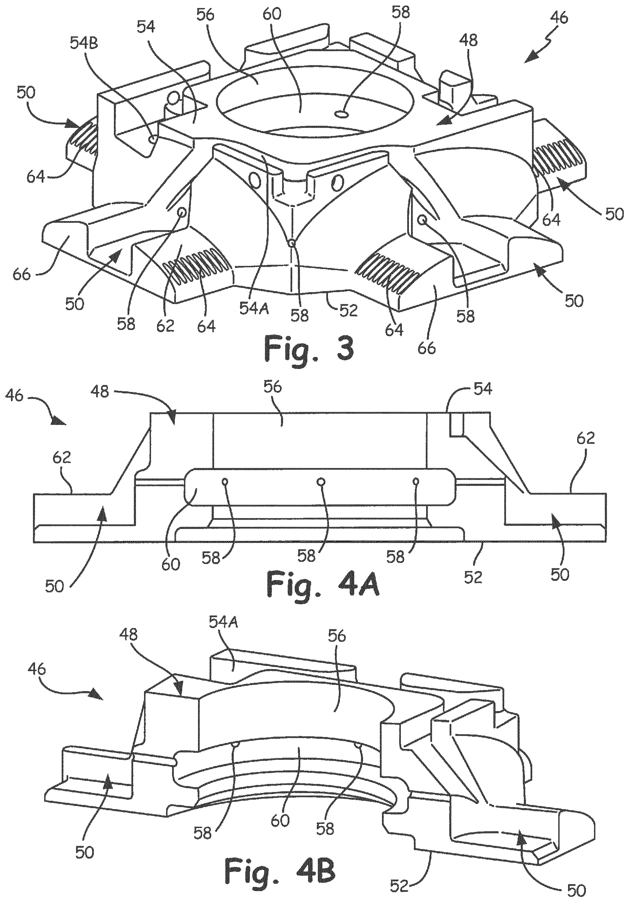

At each axial end of rotor core 38 (and poles 40) is end winding support 46, which is configured to provide end support to windings 42 to prevent the wires of windings 42 from becoming displaced due to the centrifugal forces exerted on windings 42 by the rotation of rotor shaft 36, rotor core 38, poles 40, and windings 42. End winding support 46 has an annular inner surface (shown in FIGS. 3, 4A, and 4B as annular inner surface 56) that is adjacent to rotor shaft 36 and a flat back surface (shown in FIGS. 3, 4A, and 4B as flat back surface 52) that is fastened to rotor core 38 so that end winding support 46 rotates with rotor core 38 when generator 20 is in operation. End winding support 46 can be made from various suitable materials, including non-magnetic materials such as plastic or aluminum. End winding support 46 is fastened to rotor core 38 by various means, including adhesive, welds, bolts, rivets, latches, or other fasteners.

End winding support 46 includes support body 48 (which includes an annular inner surface (shown in FIGS. 3, 4A, and 4B as annular inner surface 56) that is radially adjacent to rotor shaft 36) and winding support arms 50 (which extend radially outward from support body 48 and are adjacent to poles 40). The annular inner surface of support body 48 encircles rotor shaft 36 and provides an opening for rotor shaft 36 to extend axially along axis of rotation A. A flat back surface of support body 48 (shown in FIGS. 3, 4A, and 4B as flat back surface 52) is attached to rotor core 38. The annular inner surface of support body 48 can be fastened to rotor shaft 36 or can be held adjacent to rotor shaft 36 by being fastened to rotor core 38. The outer surface of support body 48 (the surface opposite the flat back surface adjacent rotor core 38, shown in FIGS. 3, 4A, and 4B as outer surface 54) can include grooves 54A, bolt holes 54B, or other features. Support body 48 can have a rectangular shape (when rotor core 38 includes four poles 40), a hexagonal shape (when rotor core 38 includes six poles 40), or another shape as is needed by the design, such as a circular shape, triangular shape, or octagonal shape.

Extending radially outward from support body 48 and supporting the ends of windings 42 are winding support arms 50. A flat back surface of winding support arms 48 (shown in FIGS. 3, 4A, and 4B as flat back surface 52) is attached to rotor core 38, while the outer surface of winding support arms 50 (shown in FIGS. 3, 4A, and 4B as winding contact surface 62) is configured to support windings 42 to prevent windings 42 from becoming displaced during operation. End winding support 46 has at least one winding support arm 50 but; as shown in FIGS. 2A, 2B, 3, 4A, and 4B; end winding support 46 can have multiple winding support arms 50. The number of winding support arms 50 should equal the number of poles 40 and windings 42 to provide support to each winding 42. As will be discussed in greater detail below, the outer surface of winding support arms 50 (shown in FIGS. 3, 4A, and 4B as winding contact surface 62) can have a crowned configuration to reduce the stresses on windings 42 and also can include grooves (shown in FIGS. 3, 4A, and 4B as wire grooves 64) to prevent the individual wires of windings 42 from movement. End winding support 46 includes other features, such as a lubricant manifold, which will be discussed in FIGS. 3, 4A, and 4B.

FIG. 3 is a perspective view of end winding support 46, FIG. 4A is a cross-section elevation view of end winding support 46, and FIG. 4B is a cross-section perspective view of end winding support 46. End winding support 46 includes support body 48 and winding support arms 50, both of which have flat back surface 52. Support body 48 includes outer surface 54 (having grooves 54A and bolt holes 54B), annular inner surface 56, orifices 58, and annulus 60 (together orifices 58 and annulus 60 make up the lubricant manifold). Winding support arms 50 include winding contact surface 62, wire grooves 64, and lip 66.

As discussed above, annular inner surface 56 of support body 48 is radially adjacent to rotor shaft 36 so that rotor shaft 36 extends through the annular opening in support body 48 around which is annular inner surface 56. Flat back surface 52 is adjacent to rotor core 38 (which is a bottom surface not viewable in either of FIGS. 3, 4A, or 4B). Support body 48 can be fastened to rotor shaft 36 or can be held adjacent to rotor shaft 36 without being fastened to rotor shaft 36 by being fastened to rotor core 38 on flat back surface 52. Support body 48 can be fastened to rotor shaft 36 and/or rotor core 38 by various means, including adhesive, welds, bolts, clasps, rivets, latches, or other fasteners.

End winding support 46 is shown in FIGS. 3, 4A, and 4B as having four winding support arms 50 extending radially outward from support body 48. In FIGS. 3, 4A, and 4B, winding support arms 50 extend outward from support body 48 at an angle that is perpendicular to a line tangent to annular inner surface 56 (like rays extending from a center point), but in other designs winding support arms 50 can extend radially outward from support body 48 at another angle so as to be axially aligned with poles 40 of rotor core 38, such as an angle that is non-parallel to a line perpendicular to annular inner surface 56.

Flat back surface 52 of end winding support 46 (a rear surface of both support body 48 and winding support arms 50) attaches to rotor core 38 and poles 40. Winding contact surface 62 of winding support arms 50, which is opposite flat back surface 52, is in contact with windings 42 and prevents windings 42 from displacing when generator 20 is in operation. Winding contact surface 62 can be crowned to reduce the stresses on windings 42 and can include grooves 64 to prevent the individual wires of windings 42 from movement. Winding support arms 50, and support body 48, can include other grooves 54A or indents that allow cooling air or lubricant/oil to access various components of main rotor assembly 34A. Additionally, winding support arms 50 can include lip 66 on the radially outward end to aid in keeping windings 42 from moving. When rotor core 38 has a configuration that includes four poles 40, winding support arms 50 will extend radially away from support body 48 at an angle 90 degrees from adjacent winding support arms 50 so as to be axially aligned with poles 40.

Within support body 48 are orifices 58 and annulus 60 (which is on annular inner surface 56). Together, orifices 58 and annulus 60 transfer and disperse lubricant, such as oil, from the surface of rotor shaft 36 and annular inner surface 56 to windings 42. Orifices 58 are holes that extend through support body 48 from annular inner surface 56 to the radially exterior surface of support body 48 adjacent winding support arms 50. Support body 48 can include any number of orifices 58 having any orientation, with a preferred configuration that transfers lubricant to windings 42 at a rate that keeps windings 42 sufficiently cool without wasting or inefficiently using more lubricant than needed. FIGS. 3, 4A, and 4B show a configuration that includes orifices 58 being equally spaced around end winding support 46 with each of orifices 58 being at an angle that is perpendicular to a line tangent to annular inner surface 56. Additionally, each orifice 58 can have a varying cross-sectional area as orifice 58 extends through support 48, such as an opening on annular inner surface 56 that is smaller or larger than the opening on the radially exterior surface of support 48.

Annulus 60 is an annular groove on annular inner surface 56. Annulus 60 provides a gap between support body 48 and rotor shaft 36 in which a lubricant, such as oil, can accumulate and then be transferred through orifices 58 to winding support arms 50 and windings 42. The size and depth of annulus 60 is configured to meter the amount of lubricant allowed to flow through orifices 58 so that the lubricant is not used inefficiently. Additionally, the opening of orifices 58 on annular inner surface 56 can be placed in annulus 60 to allow for lubricant to flow directly from annulus 54 into orifices 58, or the opening of orifices 58 on annular inner surface 56 can be near but not in annulus 60 to allow for the lubricant to first flow along annular inner surface 56 before entering orifices 58. Annulus 60 can have a constant or varying groove depth depending on design considerations to prevent excessive lubricant. Also, annulus 60 can be a varying distance (axially) from flat back surface 52 or can be a number of annular grooves suited to meter the amount of lubricant transferred to orifices 58.

As mentioned above, winding contact surface 62 of winding support arms 50 can be crowned to reduce stresses on windings 42 while holding the individual wires in place to prevent displacement during the operation of generator 20. Additionally, end winding support 46 includes a lubricant manifold (orifices 58 and annulus 60) that provides lubricant, such as oil, to windings 42 from the interior of support body 48, and more specifically from annular inner surface 56 and rotor shaft 36. Orifices 58 transfer the lubricant/oil while annulus 60 meters the flow of lubricant to ensure that a sufficient amount of lubricant/oil is being transferred to windings 42 while preventing excessive lubricant loss. End winding support 46 is one continuous piece that circumferentially encircles rotor shaft 36 and is threaded onto rotor shaft 36 during installation. The one-piece configuration of end winding support 46 is preferred on some generators to provide a more complete connection between rotor shaft 36 and end winding support 46 and to reduce the number of pieces that can become damaged during operation. Orifices 58 and annulus 60 are integrated into support body 48 to allow for lubricant to be distributed to windings 42 without additional and cumbersome lubricant/oil distribution components, therefore reducing cost, increasing efficiency, and improving durability.

### Discussion of Possible Embodiments

The invention is defined by the independent claims. Preferred features are defined by the dependent claims.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

The plurality of orifices are equally spaced circumferentially around the support body.

Each of the plurality of orifices are angled to be perpendicular to the annular inner surface of the support body at the point where each of the plurality of orifices intersects the annular inner surface.

A rotor for a generator includes a shaft, a rotor core radially outward from the shaft and having a plurality of poles spanning axially along the rotor core, and an end winding support radially outward from the shaft and adjacent to the rotor core. The end winding support can include a support body with an annular inner surface adjacent to the shaft, a plurality of winding support arms that extend radially outward from the support body, and a plurality of orifices extending from the annular inner surface of the support body to an exterior surface of the support adjacent the plurality of winding support arms. The rotor also includes a plurality of windings with each winding being wrapped axially around each of the plurality of poles and a corresponding end winding support arm. The plurality of orifices are configured to transfer lubricant from a surface of the shaft to the plurality of windings.

The rotor of the preceding paragraph can optionally include, additionally and/or alternatively, any one or more of the following features, configurations and/or additional components:

An annulus on the annular inner surface of the support body for metering the amount of lubricant transferred to the plurality of windings through the plurality of orifices.

A winding contact surface of each winding support arm is crowned.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A one-piece end winding support (46) for a generator rotor comprising:
a support body (48) with an annular inner surface (56) configured to be radially outward from a rotor shaft (36);
a plurality of winding support arms (50) extending radially outward from the support body; and
a plurality of orifices (58) extending from the annular inner surface of the support to an exterior surface of the support body adjacent the plurality of winding support arms, the plurality of orifices configured to transfer lubricant from a surface of the rotor shaft to a plurality of windings (42) located on the plurality of winding support arms;
**characterised in that** at least one orifice of the plurality of orifices is angled to be non-parallel to a line perpendicular to the annular inner surface of the support body at the point where the at least one orifice intersects the annular inner surface.

2. The end winding support of claim 1, wherein at least four winding support arms extend radially outward from the support body.

3. The end winding support of claim 2, wherein the at least four winding support arms extend radially outward from the support body at an angle perpendicular to the annular inner surface of the support body.

4. The end winding support of claim 1, 2 or 3 further comprising:
an annulus (60) on the annular inner surface of the support body for metering the amount of lubricant transferred to the plurality of windings through the plurality of orifices.

5. The end winding support of claim 4 or 5, wherein a depth of the annulus is constant.

6. The end winding support of claim 4 or 5, wherein the plurality of orifices extend from the annulus on the annular inner surface to the exterior surface of the support body.

7. The end winding support of any preceding claim, wherein at least two orifices of the plurality of orifices are arranged to provide a sufficient amount of lubricant to each of the plurality of windings.

8. The end winding support of any preceding claim, wherein a winding contact surface (62) of each winding support arm is crowned.

9. The end winding support of any preceding claim, wherein the end winding support (46) is constructed from plastic.

10. The end winding support of any preceding claim, wherein the plurality of orifices are equally spaced circumferentially around the support body.

11. The end winding support of any preceding claim, wherein each of the plurality of orifices are angled to be perpendicular to the annular inner surface of the support body at the point where each of the plurality of orifices intersects the annular inner surface.

12. A rotor for a generator comprising:
a shaft (36);
a rotor core (38) radially outward from the shaft and having a plurality of poles (40) spanning axially along the rotor core;
a one-piece end winding support (46) radially outward from the shaft and adjacent to the rotor core, the end winding support as defined in any preceding claim;
the support body (48) with the annular inner surface (56) adjacent to the shaft;
a plurality of windings (42), each winding being wrapped axially around each of the plurality of poles and a corresponding end winding support arm,
wherein the plurality of orifices are configured to transfer lubricant from a surface of the shaft to the plurality of windings.

## Patentansprüche

1. Einteiliger Endwicklungsträger (46) für einen Generatorrotor, umfassend:
einen Trägerkörper (48) mit einer ringförmigen Innenfläche (56), der ausgelegt ist, um sich von einer Rotorwelle (36) nach außen zu erstrecken;
eine Vielzahl von Wicklungsträgerarmen (50), die sich vom Trägerkörper radial nach außen erstrecken; und
eine Vielzahl von Öffnungen (58), die sich benachbart zur Vielzahl von Wicklungsträgerarmen von der ringförmigen Innenfläche des Trägers zu einer Außenfläche des Trägerkörpers erstrecken, wobei die Vielzahl von Öffnungen ausgelegt ist, um Schmiermittel von einer Fläche der Rotorwelle zu einer Vielzahl von Endwicklungen (42) weiterzuleiten, die sich an der Vielzahl von Wicklungsträgerarmen befinden;
**dadurch gekennzeichnet, dass** mindestens eine Öffnung der Vielzahl von Öffnungen angewinkelt ist, um an dem Punkt, an dem mindestens eine Öffnung die ringförmige Innenfläche schneidet, nicht parallel zu einer Linie zu sein, die rechtwinklig zur Innenfläche des Trägerkörpers verläuft.

2. Endwicklungsträger nach Anspruch 1, wobei sich mindestens vier Wicklungsträgerarme vom Trägerkörper radial nach außen erstrecken.

3. Endwicklungsträger nach Anspruch 2, wobei sich die mindestens vier Wicklungsträgerarme vom Trägerkörper rechtwinklig zur ringförmigen Innenfläche des Trägerkörpers radial nach außen erstrecken.

4. Endwicklungsträger nach Anspruch 1, 2 oder 3, ferner umfassend:
einen Ring (60) an der ringförmigen Innenfläche des Trägerkörpers zum Dosieren der Schmiermittelmenge, die durch die Vielzahl von Öffnungen zur Vielzahl von Wicklungen weitergeleitet wird.

5. Endwicklungsträger nach Anspruch 4 oder 5, wobei die Tiefe des Rings konstant ist.

6. Endwicklungsträger nach Anspruch 4 oder 5, wobei sich die Vielzahl von Öffnungen vom Ring an der ringförmigen Innenfläche zur Außenfläche des Trägerkörpers erstrecken.

7. Endwicklungsträger nach einem der vorhergehenden Ansprüche, wobei mindestens zwei Öffnungen der Vielzahl von Öffnungen angeordnet sind, um jeder der Vielzahl von Wicklungen eine ausreichende Schmiermittelmenge bereitzustellen.

8. Endwicklungsträger nach einem der vorhergehenden Ansprüche, wobei eine Wicklungskontaktfläche (62) jedes Wicklungsträgerarms ballig ist.

9. Endwicklungsträger nach einem der vorhergehenden Ansprüche, wobei der Endwicklungsträger (46) aus Kunststoff konstruiert ist.

10. Endwicklungsträger nach einem der vorhergehenden Ansprüche, wobei die Vielzahl von Öffnungen am Umfang des Trägerkörpers in gleichmäßigen Abständen angeordnet ist.

11. Endwicklungsträger nach einem der vorhergehenden Ansprüche, wobei jede der Vielzahl von Öffnungen angewinkelt ist, um an dem Punkt, an dem jede der Vielzahl von Öffnungen die ringförmige Innenfläche schneidet, rechtwinklig zur ringförmigen Innenfläche des Trägerkörpers zu sein.

12. Rotor für einen Generator, umfassend:
eine Welle (36);
einen Rotorkern (38), der sich von der Welle radial nach außen erstreckt und eine Vielzahl von Polen (40) aufweist, die sich axial entlang des Rotorkerns erstrecken;
einen einteiligen Endwicklungsträger (46), der sich von der Welle radial nach außen erstreckt und dem Rotorkern benachbart ist, wobei der Endwicklungsträger in einem der vorhergehenden Ansprüche definiert ist;
den Trägerkörper (48) mit der ringförmigen Innenfläche (56) benachbart zur Welle;
eine Vielzahl von Wicklungen (42), wobei jede Wicklung axial um jeden der Vielzahl von Polen und einen entsprechenden Endwicklungsträgerarm gewickelt ist,
wobei die Vielzahl von Öffnungen ausgelegt sind, um Schmiermittel von einer Fläche der Welle zur Vielzahl von Wicklungen weiterzuleiten.

## Revendications

1. Support d'enroulement d'extrémité monobloc (46) pour un rotor de générateur comprenant :
un corps de support (48) avec une surface interne annulaire (56) configurée pour être radialement vers l'extérieur à partir d'un arbre de rotor (36) ;
une pluralité de bras de support d'enroulement (50) s'étendant radialement vers l'extérieur à partir du corps de support ; et
une pluralité d'orifices (58) s'étendant de la surface interne annulaire du support vers une surface externe du corps de support adjacente à la pluralité de bras de support d'enroulement, la pluralité d'orifices étant configurés pour transférer du lubrifiant d'une surface de l'arbre de rotor vers une pluralité d'enroulements (42) situés sur la pluralité de bras de support d'enroulement ;
**caractérisé en ce qu'**au moins un orifice de la pluralité d'orifices est incliné de sorte à être non parallèle à une ligne perpendiculaire à la surface interne annulaire du corps de support à l'endroit où l'au moins un orifice coupe la surface interne annulaire.

2. Support d'enroulement d'extrémité selon la revendication 1, dans lequel au moins quatre bras de support d'enroulement s'étendent radialement vers l'extérieur à partir du corps de support.

3. Support d'enroulement d'extrémité selon la revendication 2, dans lequel les au moins quatre bras de support d'enroulement s'étendent radialement vers l'extérieur à partir du corps de support selon un angle perpendiculaire à la surface interne annulaire du corps de support.

4. Support d'enroulement d'extrémité selon la revendication 1, 2 ou 3 comprenant en outre :
un anneau (60) sur la surface interne annulaire du corps de support pour doser la quantité de lubrifiant transférée vers la pluralité d'enroulements à travers la pluralité d'orifices.

5. Support d'enroulement d'extrémité selon la revendication 4 ou 5, dans lequel une profondeur de l'anneau est constante.

6. Support d'enroulement d'extrémité selon la revendication 4 ou 5, dans lequel la pluralité d'orifices s'étendent de l'anneau sur la surface interne annulaire à la surface externe du corps de support.

7. Support d'enroulement d'extrémité selon l'une quelconque des revendications précédentes, dans lequel au moins deux orifices de la pluralité d'orifices sont agencés pour fournir une quantité suffisante de lubrifiant à chacun de la pluralité d'enroulements.

8. Support d'enroulement d'extrémité selon une quelconque revendication précédente, dans lequel une surface de contact d'enroulement (62) de chaque bras de support d'enroulement est couronnée.

9. Support d'enroulement d'extrémité selon une quelconque revendication précédente, dans lequel le support d'enroulement d'extrémité (46) est construit à partir de plastique.

10. Support d'enroulement d'extrémité selon une quelconque revendication précédente, dans lequel la pluralité d'orifices sont équidistants circonférentiellement autour du corps de support.

11. Support d'enroulement d'extrémité selon l'une quelconque des revendications précédentes, dans lequel chacun de la pluralité d'orifices est incliné de sorte à être perpendiculaire à la surface interne annulaire du corps de support à l'endroit où chacun de la pluralité d'orifices coupe la surface interne annulaire.

12. Rotor pour un générateur comprenant :
un arbre (36) ;
un noyau de rotor (38) radialement vers l'extérieur à partir de l'arbre et ayant une pluralité de pôles (40) s'étendant axialement le long du noyau de rotor ;
un support d'enroulement d'extrémité monobloc (46) radialement vers l'extérieur à partir de l'arbre et adjacent au noyau de rotor, le support d'enroulement d'extrémité étant tel que défini dans une quelconque revendication précédente ;
le corps de support (48) avec la surface interne annulaire (56) adjacente à l'arbre ;
une pluralité d'enroulements (42), chaque enroulement étant enroulé axialement autour de chacun de la pluralité de pôles et d'un bras de support d'enroulement d'extrémité correspondant,
dans lequel la pluralité d'orifices sont configurés pour transférer du lubrifiant d'une surface de l'arbre vers la pluralité d'enroulements.
